# EUROPEAN PATENT APPLICATION

(11) **EP 3 101 044 A1**
(43) Date of publication of application: **07.12.2016**
(21) Application number: 15743095.0
(22) Date of filing: 22.01.2015
(51) Int. Cl.: C08G 18/10, C08G 18/76, C09D 175/04, C09J 175/04

(54) **POLYISOCYANATE COMPOSITION, TWO-PACK-TYPE CURABLE POLYURETHANE RESIN, COATING MATERIAL, ADHESIVE, AND PROCESS FOR PRODUCING POLYISOCYANATE COMPOSITION**

(30) Priority: 28.01.2014 JP 2014013579
(71) Applicant: Mitsui Chemicals, Inc., Minato-ku, Tokyo 105-7122 (JP)
(72) Inventor: UCHIDA, Takashi, Sodegaura-shi Chiba 299-0265 (JP); MASUI, Masakazu, Shizuoka-shi Shizuoka 424-8710 (JP); YOSHIDA, Tsutomu, Sodegaura-shi Chiba 299-0265 (JP); IMAI, Akihiro, Sodegaura-shi Chiba 299-0265 (JP); TERADA, Hideki, Selangor Darul Ehsan 47500 (MY); NAKASHIMA, Tatsuya, Sodegaura-shi Chiba 299-0265 (JP)
(74) Representative: Hoffmann Eitle
(86) International application number: PCT/JP2015/051625
(87) International publication number: WO 2015/115292

(57) **Abstract**

A polyisocyanate composition produced by reaction of xylylenediisocyanate with trimethylolalkane, the isocyanate derivative content relative to a total amount of the polyisocyanate composition is 45 mass% or less, the isocyanate derivative being produced by reaction of 3 molecules of xylylenediisocyanate with 1 molecule of trimethylolalkane.

## Description

### TECHNICAL FIELD

The present invention relates to a polyisocyanate composition, a two-component curable polyurethane resin, a coating, an adhesive, and a method for producing a polyisocyanate composition. In particular, the present invention relates to a polyisocyanate composition, a two-component curable polyurethane resin in which the polyisocyanate composition is used, furthermore, a coating and adhesive including the two-component curable polyurethane resin, and a method for producing a polyisocyanate composition.

### BACKGROUND ART

With a two-component curable polyurethane resin, a curing agent including polyisocyanate and a main component including macropolyol are individually prepared and they are blended at the time of use, and is widely used in the fields of, for example, coatings and adhesives.

For the two-component curable polyurethane resin, to be more specific, Patent Document 1 has proposed, for example, a curing agent including polyol-modified xylylenediisocyanate (trimethylolpropane-modified product, etc.) and a biuret-modified hexamethylene diisocyanate, and/or, a trimer of hexamethylene diisocyanate at a predetermined ratio, and a two-component curable polyurethane resin including the curing agent.

In Patent Document 1, to be specific, a mixture of the following is used: TAKENATE D-110N (manufactured by Mitsui Chemicals polyurethane) as trimethylolpropane-modified resistance, solvent resistance, stain resistance, and weather resistance in good balance.

### Citation List

### Patent Document

Patent Document 1: Japanese Unexamined Patent Publication No. 2010-024386

### SUMMARY OF THE INVENTION

### PROBLEM TO BE SOLVED BY THE INVENTION

Meanwhile, further improvement in adhesion, and also improvement in quick-drying properties are required for two-component curable polyurethane resin.

An object of the present invention is to provide a polyisocyanate composition that can achieve improvement in adhesion and quick-drying properties, a two-component curable polyurethane resin in which the polyisocyanate composition is used, and furthermore, a coating and adhesive including the two-component curable polyurethane resin, and a method for producing the polyisocyanate composition.

### MEANS FOR SOLVING THE PROBLEM

To achieve the above-described object, a polyisocyanate composition of the present invention is a polyisocyanate composition produced by reaction of xylylenediisocyanate with trimethylolalkane, wherein the isocyanate derivative content relative to a total amount of the polyisocyanate composition is 45 mass% or less, the isocyanate derivative being produced by reaction of 3 molecules of xylylenediisocyanate with 1 molecule of trimethylolalkane.

In the polyisocyanate composition of the present invention, it is preferable that in the reaction of xylylenediisocyanate with trimethylolalkane, the equivalent ratio (isocyanate group/hydroxyl group) of the isocyanate group in xylylenediisocyanate relative to the hydroxyl group in trimethylolalkane is 2.5 or more and 6 or less.

In the polyisocyanate composition of the present invention, it is preferable that the polyisocyanate composition is produced by removing unreacted xylylenediisocyanate by liquid-liquid extraction from a crude product produced by reaction of xylylenediisocyanate with trimethylolalkane.

A two-component curable polyurethane resin of the present invention includes a curing agent including the above-described polyisocyanate composition and a main component including a polyol component.

A coating of the present invention includes the above-described two-component curable polyurethane resin.

An adhesive of the present invention includes the above-described two-component curable polyurethane resin.

In a method for producing a polyisocyanate composition of the present invention, a polyisocyanate composition is produced by allowing xylylenediisocyanate to react with trimethylolalkane, and thereafter, removing unreacted xylylenediisocyanate, from the produced crude product, by liquid-liquid extraction in which an extraction solvent including aliphatic hydrocarbons, and ketones and/or alkylesters are used, wherein the isocyanate derivative content relative to a total amount of the polyisocyanate composition is 45 mass% or less, the isocyanate derivative being produced by reaction of 3 molecules of xylylenediisocyanate with 1 molecule of trimethylolalkane.

### Effects of the Invention

With the polyisocyanate composition and the method for producing thereof of the present invention, the isocyanate derivative content is within the above-described predetermined range, the isocyanate derivative being produced by reaction of 3 molecules of xylylenediisocyanate with 1 molecule of trimethylolalkane, and therefore a two-component curable polyurethane resin having excellent adhesion and quick-drying properties can be produced.

Therefore, two-component curable polyurethane resin, coating, and adhesive of the present invention have excellent adhesion and quick-drying properties.

### BRIEF DESCRIPTION OF THE DRAWINGS

FIG. 1 shows a gel permeation chromatogram of a polyisocyanate composition of Example 1.
FIG. 2 shows a gel permeation chromatogram of a polyisocyanate composition of Example 2.
FIG. 3 shows a gel permeation chromatogram of a polyisocyanate composition of Comparative Example 1.

### DESCRIPTION OF EMBODIMENTS

The polyisocyanate composition of the present invention can be obtained by reaction of xylylenediisocyanate (XDI) with trimethylolalkane (TMA). Although details are to be described later, the polyisocyanate composition of the present invention contains, at a predetermined proportion, an isocyanate derivative (hereinafter may be referred to as 1 molecular trimethylolalkane product) produced by reaction of 3 molecules of xylylenediisocyanate with 1 molecule of trimethylolalkane.

In the present invention, xylylenediisocyanate includes structural isomers of 1,2-xylylenediisocyanate (o-xylylenediisocyanate (o-XDI)), 1,3-xylylenediisocyanate (m-xylylenediisocyanate (m-XDI)), and 1,4-xylylenediisocyanate (p-xylylenediisocyanate (p-XDI)).

These xylylenediisocyanates may be used singly or in combination of two or more. For the xylylenediisocyanate, preferably 1,3-xylylenediisocyanate and 1,4-xylylenediisocyanate, more preferably 1,3-xylylenediisocyanate is used.

In the present invention, examples of trimethylolalkane include alkane having three methylol groups and having 1 to 20 carbon atoms such as trimethylolmethane, trimethylolethane, trimethyloln-propane, trimethylolisopropane, trimethyloln-butane, trimethylolisobutane, trimethylols-butane, trimethylolt-butane, trimethylolpentane, trimethylolhexane, trimethylolheptane, trimethyloloctane, trimethylolnonane, trimethyloldecane, trimethylolundecane, and trimethyloldodecane.

These trimethylolalkanes may be used singly or in combination of two or more.

For the trimethylolalkane, preferably, alkane having three methylol groups and having four or less carbon atoms, and more preferably, alkane having three methylol groups and having three or less carbon atoms, even more preferably, trimethylolethane and trimethylolpropane are used, and particularly preferably, trimethylolpropane is used.

Furthermore, as necessary, along with trimethylolalkane, other low molecular-weight polyol (low molecular-weight polyol excluding trimethylolalkane (the same applies to the following)) can be used in combination.

The low molecular-weight polyol is a compound having two or more hydroxyl groups and having a number average molecular weight of less than 400, preferably less than 300, and examples thereof include dihydric alcohols such as ethylene glycol, propylene glycol, 1,3-propanediol, 1,4-butyleneglycol, 1,3-butyleneglycol, 1,2-butyleneglycol, 1,5-pentanediol, 1,6-hexanediol, neopentyl glycol, 3-methyl-1,5-pentanediol, 2,2,2-trimethylpentanediol, 3,3-dimethylolheptane, alkane (C 7 to 20) diol, 1,3- or 1,4-cyclohexanedimethanol and a mixture thereof, 1,3- or 1,4-cyclohexanediol and a mixture thereof, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerin; and tetrahydric alcohols such as tetramethylolmethane (pentaerythritol).

These other low molecular-weight polyols may be used singly or in combination of two or more.

When trimethylolalkane and other low molecular-weight polyol are used in combination, the mixing ratio of trimethylolalkane relative to 100 mol of trimethylolalkane and other low molecular-weight polyol in total is, for example, 1 mol or more, preferably 10 mol or more, and for example, 99 mol or less, preferably 90 mol or less. The mixing ratio of the other low molecular-weight polyol relative to 100 mol of trimethylolalkane and other low molecular-weight polyol in total is, for example, 1 mol or more, preferably 10 mol or more, and for example, 99 mol or less, preferably 90 mol or less.

In the reaction of xylylenediisocyanate with trimethylolalkane, when the other low molecular-weight polyol is further used, the polyisocyanate composition of the present invention refers to a reaction product of xylylenediisocyanate and trimethylolalkane in the produced reaction product.

Preferably, trimethylolalkane is used singly without using the other low molecular-weight polyol.

To produce the polyisocyanate composition, xylylenediisocyanate is blended with trimethylolalkane and the mixture is subjected to urethane-forming reaction so that the equivalent ratio (isocyanate group/hydroxyl group) of the isocyanate group in xylylenediisocyanate relative to the hydroxyl group in the trimethylolalkane (and dihydric alcohol blended as necessary (the same applies to the following)) is, for example, 2.5 or more, preferably 2.6 or more, more preferably 2.7 or more, for example, 6 or less, preferably 5.5 or less, further preferably 5.0 or less.

When the equivalent ratio is within the above-described range, the isocyanate derivative content (the isocyanate derivative produced by reaction of 3 molecules of xylylenediisocyanate with 1 molecule of trimethylolalkane (1 molecular trimethylolalkane product)) can be adjusted to be within the range to be described later.

The reaction conditions in urethane-forming reaction are as follows: for example, in an inert gas atmosphere such as nitrogen gas, under normal pressure (atmospheric pressure), the reaction temperature of, for example, 40°C or more, preferably 50°C or more, and more preferably 60°C or more, and for example, 120°C or less, preferably 100°C or less, further preferably 90°C or less. The reaction time is, for example, 0.5 hours or more, preferably 1 hour or more, and for example, 30 hours or less, preferably 20 hours or less, more preferably 10 hours or less.

The urethane-forming reaction is terminated when the desired isocyanate group content (theoretical amount of unreacted isocyanate group concentration calculated from charged amount) is achieved in the reaction system.

In the urethane-forming reaction, as necessary, for example, a known urethane-forming catalyst such as amines and an organometallic compound can be added, and furthermore, a known organic solvent can be added.

Examples of the amines include tertiary amines such as triethylamine, triethylenediamine, bis-(2-dimethylaminoethyl) ether, and N-methylmorphiline; quaternary ammonium salts such as tetraethyl hydroxyl ammonium; and imidazoles such as imidazole and 2-ethyl-4-methyl imidazole.

Examples of the organometallic compound include organic tin compounds such as tin acetate, tin octylate, tin oleate, tin laurate, dibutyltindiacetate, dimethyltindilaurate, dibutyltindilaurate, dibutyltin dimercaptide, dibutyltinmaleate, dibutyltindilaurate, dibutyltin dineodecanoate, dioctyltin dimercaptide, dioctyltin dilaurate, and dibutyltin dichloride; organic lead compounds such as lead octanoate and lead naphthenate; organic nickel compounds such as nickel naphthenate; organic cobalt compounds such as cobalt naphthenate; organic copper compounds such as copper octanoate; and organic bismuth compounds such as bismuth octylate and bismuth neodecanoate.

For the urethane-forming catalyst, for example, potassium salts such as potassium carbonate, potassium acetate, and potassium octylate are also used.

These urethane-forming catalysts may be used singly or in combination of two or more.

Examples of the organic solvent include ketones such as acetone, methyl ethyl ketone, methylisobutylketone, and cyclohexanone; nitriles such as acetonitrile; alkylesters such as methyl acetate, ethyl acetate, butyl acetate, and isobutyl acetate; aliphatic hydrocarbons such as n-hexane, n-heptane, and octane; alicyclic hydrocarbons such as cyclohexane and methylcyclohexane; aromatic hydrocarbons such as toluene, xylene, and ethylbenzene; glycol etheresters such as methylcellosolveacetate, ethylcellosolveacetate, methylcarbitolacetate, ethylcarbitolacetate, ethylene glycolethyletheracetate, propylene glycolmethyletheracetate, 3-methyl-3-methoxybutylacetate, and ethyl-3-ethoxypropionate; ether such as diethylether, tetrahydrofuran, and dioxane; halogenated aliphatic hydrocarbons such as methyl chloride, methylene chloride, chloroform, carbon tetrachloride, methyl bromide, methylene iodide, and dichloroethane; polar aprotics such as N-methylpyrrolidone, dimethylformamide, N,N'-dimethylacetamide, dimethyl sulfoxide, and hexamethyl phosphor amide.

These organic solvents may be used singly or in combination of two or more.

The organic solvent can be contained as is in the polyisocyanate composition, and as described next, can be removed along with the unreacted xylylenediisocyanate.

In this reaction, the unreacted xylylenediisocyanate can be removed from the obtained crude product.

In other words, when the polyisocyanate composition is produced, unreacted xylylenediisocyanate is mixed in. That is, the polyisocyanate composition is produced as a mixture of a reaction product of xylylenediisocyanate and trimethylolalkane, and unreacted xylylenediisocyanate.

When the unreacted xylylenediisocyanate concentration (hereinafter may be referred to as remaining monomer concentration) is high in the produced polyisocyanate composition, the unreacted xylylenediisocyanate is removed from the polyisocyanate composition to reduce the remaining monomer concentration.

The method for removing the unreacted xylylenediisocyanate includes distillation methods such as thin film distillation, and extraction and purification methods such as liquid-liquid extraction.

In the thin film distillation method, the crude product (polyisocyanate composition with unreacted xylylenediisocyanate mixed therein) produced from the above-described reaction is distillated by a thin-film distiller.

The conditions for the thin film distillation are as follows: the degree of vacuum of, for example, 1Pa or more, preferably 10Pa or more, and for example, 3000Pa or less, preferably 1000Pa or less.

The temperature conditions are, for example, 100°C or more, preferably 120°C or more, and for example, 200°C or less, preferably 180°C or less.

In liquid-liquid extraction, the polyisocyanate composition having the unreacted xylylenediisocyanate mixed therein is allowed to contact an extraction solvent. The unreacted xylylenediisocyanate in the polyisocyanate composition is separated in this manner.

The extraction solvent is not particularly limited, as long as the extraction solvent is inactive to the isocyanate group, and is a solvent that can separate xylylenediisocyanate. Preferably, a mixed extraction solvent in which a plurality of types of solvents are mixed is used.

Examples of the mixed extraction solvent include, to be more specific, a mixed extraction solvent including, for example, an organic solvent (hereinafter referred to as first organic solvent) having a solubility parameter (see POLYMER HANDBOOK (fourth ed. editor: J.BRANDRUP, E.H.IMMERGUT, and E.A.GRULKE, publisher: John Wiley & Sons, Inc. published: 1999) PVII-688 to VII-694 Table 7. The same applies to the following.) of 6 to 8, and an organic solvent (hereinafter referred to as second organic solvent) having a solubility parameter of 8.5 to 12 mixed therein.

Examples of the first organic solvent include aliphatic hydrocarbons such as pentane, hexane, heptane, octane, nonane, and decane. These first organic solvents may be used singly or in combination of two or more. For the first organic solvent, preferably, aliphatic hydrocarbons are used, and more preferably, hexane is used.

Examples of the second organic solvent include ketones such as acetone, acetonitrile, and methyl ethyl ketone; alkylesters such as ethyl acetate and butyl acetate; halogenated aliphatic hydrocarbons such as chloroform; and glycolether esters such as methyl cellosolve acetate. These second organic solvents may be used singly or in combination of two or more. For the second organic solvent, preferably, ketones and alkylesters are used, more preferably, alkylesters are used, even more preferably, ethyl acetate is used.

That is, the extraction solvent preferably contains aliphatic hydrocarbons (first organic solvent) and ketones and/or alkylesters (second organic solvent), more preferably, the extraction solvent contains aliphatic hydrocarbons and alkylesters, even more preferably, the extraction solvent consists of hexane and ethyl acetate.

The mixed extraction solvent is prepared by mixing and stirring the first organic solvent and the second organic solvent by a known method.

In the mixed extraction solvent, the mixing ratio of the components relative to 100 parts by mass of the mixed extraction solvent is as follows: the mixing ratio of the first organic solvent is, for example, 50 to 95 parts by mass, preferably 70 to 95 parts by mass, and the mixing ratio of the second organic solvent is, for example, 5 to 50 parts by mass, preferably 5 to 30 parts by mass.

When the polyisocyanate composition with unreacted xylylenediisocyanate mixed therein has a low viscosity, the first organic solvent can be used solely as the extraction solvent. In the liquid-liquid extraction method, by mixing and stirring the polyisocyanate composition and the extraction solvent, the unreacted xylylenediisocyanate in the polyisocyanate composition is subjected to liquid-liquid extraction into the extraction solvent.

In the liquid-liquid extraction, the mixing ratio of the extraction solvent relative to the polyisocyanate composition (including unreacted xylylenediisocyanate mixed therein) is as follows: the extraction solvent relative to 100 parts by mass of the polyisocyanate composition is, for example, 20 to 300 parts by mass, preferably 30 to 200 parts by mass, more preferably 40 to 150 parts by mass.

In the liquid-liquid extraction, the polyisocyanate composition and the extraction solvent are mixed, for example, under normal pressure (atmospheric pressure), for example, at 25 to 65°C, preferably 30 to 60°C, more preferably 40 to 60°C, and for example, for 2 to for 60 minutes, preferably 5 to for 40 minutes, more preferably 5 to for 30 minutes.

The unreacted xylylenediisocyanate is extracted into the extraction solvent in this manner.
Next, in this method, the mixture of the polyisocyanate composition and the extraction solvent is allowed to stand, for example, for 2 to 60 minutes, and thereafter, the extraction solvent (extraction solvent in which the unreacted xylylenediisocyanate extracted) is removed by a known method.

When the unreacted xylylenediisocyanate cannot be sufficiently removed by one liquid-liquid extraction, the liquid-liquid extraction can be repeated for a plurality of times.

When the liquid-liquid extraction is repeated, in view of adjusting the average molecular weight of the polyisocyanate composition, the repetition time is, for example, 3 or more, preferably 5 or more, and for example, 20 or less, preferably 15 or less.

In the liquid-liquid extraction method, the unreacted xylylenediisocyanate can also be extracted continuously, for example, using an extraction column. For such an extraction column, for example, an extraction column having several tens of stage plates in the column incorporated therein, and an extraction column having rotational circular type stage plates can be used. In this manner, the unreacted xylylenediisocyanate mixed in the polyisocyanate composition can be removed, and the remaining monomer concentration can be reduced.

When the extraction solvent is mixed in the polyisocyanate composition by the liquid-liquid extraction, preferably, the solvent is removed from the polyisocyanate composition.

The solvent can be removed from the polyisocyanate composition by, although depending on the type of the solvent, for example, heating under reduced pressure to, for example, 40 to 120°C. The solvent is volatilized in this manner to remove from the polyisocyanate composition.

The unreacted xylylenediisocyanate can be removed, preferably, by liquid-liquid extraction.

With the liquid-liquid extraction, the unreacted xylylenediisocyanate can be removed, the remaining monomer concentration can be reduced, and the isocyanate derivative (1 molecular trimethylolalkane product) content can be adjusted to the range to be described later, the isocyanate derivative being produced by reaction of 3 molecules of xylylenediisocyanate and 1 molecule of trimethylolalkane.

In the thus produced polyisocyanate composition, the remaining monomer concentration (unreacted xylylenediisocyanate concentration) is, for example, 3 mass% or less, preferably 1 mass% or less, more preferably 0.5 mass% or less.

The remaining monomer concentration can be obtained by gel permeation chromatogram.

To be more specific, the remaining monomer concentration is obtained as an area percentage (%) of peak area having a peak top between retention time of 27.8 minutes to 27.9 minutes relative to the total peak area in the gel permeation chromatogram obtained in conformity with Examples to be described later.

In the thus produced polyisocyanate composition, the isocyanate derivative content relative to the total amount of the polyisocyanate composition is 45 mass% or less, preferably 44 mass% or less, more preferably 43 mass% or less, and generally 20 mass% or more, the isocyanate derivative being produced by reaction of 3 molecules of xylylenediisocyanate with 1 molecule of trimethylolalkane (1 molecular trimethylolalkane product).

When the isocyanate derivative (the isocyanate derivative produced by reaction of 3 molecules of xylylenediisocyanate with 1 molecule of trimethylolalkane (1 molecular trimethylolalkane product)) content is within the above-described range, the two-component curable polyurethane resin having excellent adhesion and quick-drying properties can be produced.

The isocyanate derivative (the isocyanate derivative produced by reaction of 3 molecules of xylylenediisocyanate with 1 molecule of trimethylolalkane (1 molecular trimethylolalkane product)) content can be obtained by gel permeation chromatogram.

To be more specific, the isocyanate derivative (the isocyanate derivative produced by reaction of 3 molecules of xylylenediisocyanate with 1 molecule of trimethylolalkane) content is obtained as an area percentage (%) of peak area having a peak top between retention time 26.1 minute to 26.2 minutes relative to the total peak area in the gel permeation chromatogram obtained in conformity with Examples to be described later.

The thus produced polyisocyanate composition has a number average molecular weight based on polystyrene standard calibration in gel permeation chromatograph (GPC) measurement of, for example, 1000 or more, preferably 1150 or more, and for example, 5000 or less, preferably 4000 or less.

The thus produced polyisocyanate composition has an isocyanate group concentration of, for example, 3 mass% or more, preferably 5 mass% or more, and for example, 18.0 mass% or less, preferably 15.7 mass% or less.

The thus produced polyisocyanate composition has an average functional group number of, for example, 3.0 or more, preferably 4.3 or more, and for example, 6.0 or less, preferably 5.0 or less.

The average functional group number can be obtained by dividing the number average molecular weight with the isocyanate group equivalent.

Then, the thus produced polyisocyanate composition can be dissolved in various organic solvents, and used as a curing agent for a two-component curable polyurethane resin (e.g., coating, adhesive, etc.), and furthermore, also can be used for many industrial and technical use. As necessary, it can be used without solvent.

Examples of the organic solvent include ketones such as acetone, methyl ethyl ketone, methylisobutylketone, and cyclohexanone; nitriles such as acetonitrile; alkylesters such as methyl acetate, ethyl acetate, butyl acetate, and isobutyl acetate; aliphatic hydrocarbons such as n-hexane, n-heptane, and octane; alicyclic hydrocarbons such as cyclohexane and methylcyclohexane; aromatic hydrocarbons such as toluene, xylene, and ethylbenzene; glycol etheresters such as methylcellosolveacetate, ethylcellosolveacetate, methylcarbitolacetate, ethylcarbitolacetate, ethylene glycolethyletheracetate, propylene glycolmethyletheracetate, 3-methyl-3-methoxybutylacetate, and ethyl-3-ethoxypropionate; ether such as diethylether, tetrahydrofuran, and dioxane; halogenated aliphatic hydrocarbons such as methyl chloride, methylene chloride, chloroform, carbon tetrachloride, methyl bromide, methylene iodide, and dichloroethane; polar aprotics such as N-methylpyrrolidone, dimethylformamide, N, N'-dimethylacetamide, dimethyl sulfoxide, and hexamethyl phosphor amide.

Examples of the organic solvent further include nonpolar solvents (nonpolar organic solvent), and examples of these nonpolar solvents include aliphatic organic solvents, naphthene hydrocarbon solvents, low toxicity and solvency nonpolar organic solvents having an aniline point of, for example, 10 to 70°C, preferably 12 to 65°C, and vegetable oil represented by turpentine oil.

The nonpolar organic solvent is available as a commercially available product, and examples of the commercially available products include petroleum hydrocarbon organic solvents such as HAWS (manufactured by Shell Chemicals Japan Ltd., aniline point 15°C), Swazol 310 (manufactured by MARUZEN PETROCHEMICAL CO.,LTD., aniline point 16°C), Esso Naphtha No. 6 (manufactured by Exxon Mobil Corporation, aniline point 43°C), Laws (manufactured by Shell Chemicals Japan Ltd., aniline point 43°C), Esso Naphtha No. 5 (manufactured by Exxon Mobil Corporation, aniline point 55°C), and PEGASOL 3040 (manufactured by Exxon Mobil Corporation, aniline point 55°C); and also turpentine oils including methylcyclohexane (aniline point 40°C), ethylcyclohexane (aniline point 44°C), and Gum Turpentine N (manufactured by YASUHARA CHEMICAL CO., LTD., aniline point 27°C).

When the polyisocyanate composition is dissolved in the organic solvent, the polyisocyanate composition concentration in the solution is, for example, 30 mass% or more, preferably 40 mass% or more, more preferably 50 mass% or more, and for example, 95 mass% or less, preferably 90 mass% or less.

When the polyisocyanate composition is dissolved in the organic solvent at the above-described percentage, the solution has an isocyanate group concentration of, for example, 3.0 mass% or more, preferably 5.0 mass% or more, and for example, 20 mass% or less, preferably 18 mass% or less.

When the polyisocyanate composition is dissolved in the organic solvent at the above-described percentage, the solution has a viscosity at 25°C of, for example, 10 mPa·s or more, preferably 20 mPa·s or more, more preferably 50 mPa·s or more, and for example, 5000 mPa·s or less, preferably 4000 mPa·s or less, more preferably 3000 mPa·s or less. The measurement method for the viscosity is in conformity with Examples to be described later.

In the above-described polyisocyanate composition (trimethylolalkane-modified xylylenediisocyanate), the isocyanate derivative (the isocyanate derivative produced by reaction of 3 molecules of xylylenediisocyanate with 1 molecule of trimethylolalkane) content is in the above-described predetermined range, and therefore two-component curable polyurethane resin having excellent adhesion and quick-drying properties can be produced.

The two-component curable polyurethane resin is a composition in which the curing agent and the main component are prepared as individual packages, and they are blended at the time of use.

In the two-component curable polyurethane resin of the present invention, the curing agent contains, as an essential component, the above-described polyisocyanate composition.

The curing agent can contain, as an optional component, other polyisocyanate (polyisocyanate excluding the above-described polyisocyanate composition).

Examples of the other polyisocyanate include polyisocyanate monomers such as aromatic polyisocyanate, araliphatic polyisocyanate, aliphatic polyisocyanate, and alicyclic polyisocyanate.

Examples of the aromatic polyisocyanate include aromatic diisocyanate such as tolylene diisocyanate (2,4- or 2,6-tolylene diisocyanate or a mixture thereof)(TDI), phenylenediisocyanate (m-, p-phenylenediisocyanate or a mixture thereof), 4,4'-diphenyldiisocyanate, 1,5-naphthalenediisocyanate (NDI), diphenylmethanediisocyanate (4,4'-, 2,4'- or 2,2'-diphenylmethanediisocyanate or a mixture thereof)(MDI), 4,4'-toluidinediisocyanate (TODI), and 4,4'-diphenylether diisocyanate.

Examples of the araliphatic polyisocyanate include araliphatic diisocyanate such as xylylenediisocyanate (XDI (monomer)), tetramethylxylylenediisocyanate (1,3- or 1,4-tetramethylxylylenediisocyanate or a mixture thereof)(TMXDI), and ω,ω'-diisocyanate-1,4-diethylbenzene.

Examples of the aliphatic polyisocyanate include aliphatic diisocyanates such as trimethylenediisocyanate, 1,2-propylenediisocyanate, butylenediisocyanate (tetramethylenediisocyanate, 1,2-butylenediisocyanate, 2,3-butylenediisocyanate, 1,3-butylenediisocyanate), 1,5-pentamethylenediisocyanate (PDI), 1,6-hexamethylene diisocyanate (also called: hexamethylene diisocyanate)(HDI), 2,4,4- or 2,2,4-trimethylhexamethylene diisocyanate, and 2,6-diisocyanatemethylcaproate.

Examples of the alicyclic polyisocyanate include alicyclic diisocyanates such as hydrogenated xylylenediisocyanate (H₆XDI), 1,3-cyclopentanediisocyanate, 1,3-cyclopentene diisocyanate, cyclohexanediisocyanate (1,4-cyclohexanediisocyanate, 1,3-cyclohexanediisocyanate), 3-isocyanatomethyl-3,5,5-trimethylcyclohexylisocyanate (also called: isophoronediisocyanate)(IPDI), methylenebis(cyclohexylisocyanate)(also called: bis(isocyanatocyclohexyl) methane)(4,4'-, 2,4'- or 2,2'-methylenebis(cyclohexylisocyanate) their Trans,Trans-isomer, Trans,Cis-isomer, Cis,Cis-isomer, or a mixture thereof)(H₁₂MDI), methylcyclohexanediisocyanate (methyl-2,4-cyclohexanediisocyanate, methyl-2,6-cyclohexanediisocyanate), and norbornanediisocyanate (various isomers or a mixture thereof)(NBDI).

The other polyisocyanate includes their derivatives (excluding trimethylolalkane-modified xylylenediisocyanate).

Examples of the polyisocyanate derivative include polyisocyanate multimers (e.g., dimers, trimers (e.g., isocyanurate-modified product, iminooxadiazinedione-modified product), pentamers, heptamers, etc.), allophanate-modified products (e.g., allophanate-modified product produced by reaction of a polyisocyanate and a low molecular-weight polyol, etc.), polyol-modified products (e.g., polyol-modified product produced by reaction of polyisocyanate and a low molecular-weight polyol (alcohol adduct), etc.)(excluding trimethylolalkane-modified xylylenediisocyanate), biuret-modified products (e.g., biuret-modified products produced by reaction of polyisocyanate, and water or amines, etc.), urea-modified products (e.g., urea-modified product produced by reaction of polyisocyanate and diamine, etc.), oxadiazinetrione-modified products (e.g., oxadiazinetrione produced by reaction of polyisocyanate and carbon dioxide, etc.), carbodiimide-modified products (carbodiimide-modified product produced by decarboxylation condensation reaction of polyisocyanate, etc.), urethodione-modified products, and uretonimine-modified products.

These derivatives may be used singly or in combination of two or more.

When the other polyisocyanate (polyisocyanate excluding the above-described polyisocyanate composition) is blended, the mixing ratio of the other polyisocyanate relative to 100 parts by mass of the above-described polyisocyanate composition and the other polyisocyanate in total is as follows: the mixing ratio of the other polyisocyanate is, for example, 30 parts by mass or less, preferably 20 parts by mass or less, and generally 1 part by mass or more.

Preferably, for the curing agent, the above-described polyisocyanate composition (trimethylolalkane-modified xylylenediisocyanate) is used singly.

In the present invention, the main component includes a polyol component and for the polyol component, a low molecular-weight polyol and a high molecular weight polyol are used.

The low molecular-weight polyol is a compound having two or more hydroxyl groups and having a number average molecular weight of less than 400, preferably less than 300, and examples thereof include dihydric alcohols such as ethylene glycol, propylene glycol, 1,3-propanediol, 1,4-butyleneglycol, 1,3-butyleneglycol, 1,2-butyleneglycol, 1,5-pentanediol, 1,6-hexanediol, neopentyl glycol, 3-methyl-1,5-pentanediol, 2,2,2-trimethylpentanediol, 3,3-dimethylolheptane, alkane (C 7 to 20) diol, 1,3-or 1,4-cyclohexanedimethanol and a mixture thereof, 1,3-or 1,4-cyclohexanediol and a mixture thereof, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerin, trimethylolpropane, and triisopropanolamine; tetrahydric alcohols such as tetramethylolmethane (pentaerythritol) and diglycerol; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohols such as sucrose.

These low molecular-weight polyols may be used singly or in combination of two or more.

The high molecular weight polyol is a compound having two or more hydroxyl groups and having a number average molecular weight of 400 or more, preferably 300 or more, and examples thereof include polyetherpolyol, polyesterpolyol, polycarbonatepolyol, polyurethane polyol, epoxypolyol, vegetable oil polyol, polyolefinpolyol, acrylic polyol, and vinyl monomer-modified polyol.

For the polyetherpolyol, for example, polyalkylene (C2 to 3) polyol, and polytetramethylene ether polyol are used.

For polyalkylene (C2 to 3) polyol, for example, an addition polymerization product (including random and/or block copolymer of two or more alkyleneoxides) of alkyleneoxide such as ethyleneoxide and propyleneoxide using the above-described low molecular-weight polyol or aromatic/aliphatic polyamine as an initiator is used. To be specific, for example, polyethylene glycol, polypropylene glycol, and an ethyleneoxide-propyleneoxide copolymer (random and/or block copolymer) are used.

Examples of the polytetramethylene ether polyol include a ring-opening polymerization product produced by cationic polymerization of tetrahydrofuran, and noncrystalline polytetramethylene ether glycol produced by copolymerizing the above-described dihydric alcohol to polymerization unit of tetrahydrofuran.

For the polyesterpolyol, for example, a polycondensate produced by allowing the above-described low molecular-weight polyol to react with polybasic acid under known conditions can be used.

Examples of the polybasic acid include saturated aliphatic dicarboxylic acids (having 11 to 13 carbon atoms) such as oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, etc.; unsaturated aliphatic dicarboxylic acids such as maleic acid, fumaric acid, itaconic acid, etc.; aromatic dicarboxylic acids such as orthophthalic acid, isophthalic acid, terephthalic acid, toluenedicarboxylic acid, naphthalenedicarboxylic acid, etc.; alicyclic dicarboxylic acid such as hexahydrophthalic acid, etc.; the other carboxylic acids such as dimer acid, hydrogenated dimer acid, HET acid, etc., and acid anhydrides derived from these carboxylic acids such as oxalic anhydride, succinic anhydride, maleic anhydride, phthalic anhydride, succinic 2-alkyl (C12 to C 18) anhydride, tetrahydrophtalic anhydride, trimellitic anhydride, and furthermore, halides derived from these carboxylic acids such as oxalic acid dichloride, adipic acid dichloride, and sebacic acid dichloride.

Examples of the polyesterpolyol include vegetable oil-based polyesterpolyol produced by subjecting hydroxycarboxylic acid such as a hydroxyl group-containing vegetable oil fatty acid (e.g., castor oil fatty acid containing ricinoleic acid, hydrogenated castor oil fatty acid containing 12-hydroxystearic acid, etc.) to condensation reaction under known conditions using the above-described low molecular-weight polyol.

Examples of the polyesterpolyol include polycaprolactonepolyol and polyvalerolactonepolyol produced by subjecting lactones such as ε-caprolactone and γ-valerolactone to ring-opening polymerization using the above-described low molecular-weight polyol (preferably dihydric alcohol) as an initiator, and also the lactone polyesterpolyol produced by copolymerizing the above-described dihydric alcohol with these.

Examples of the polycarbonatepolyol include ring-opening polymerization product of ethylenecarbonate using the above-described low molecular-weight polyol (preferably dihydric alcohol) as an initiator, and noncrystalline polycarbonatepolyol produced by copolymerizing dihydric alcohol such as 1,4-butanediol, 1,5-pentanediol, 3-methyl-1,5-pentanediol, and 1,6-hexanediol and a ring-opening polymerization product.

The polyurethane polyol can be produced as polyesterpolyurethane polyol, polyetherpolyurethane polyol, polycarbonatepolyurethane polyol, or polyesterpolyetherpolyurethane polyol by allowing the polyesterpolyol, polyetherpolyol and/or polycarbonatepolyol produced as described above to react with the polyisocyanate so that the equivalent ratio (OH/NCO) of the hydroxyl group (OH) relative to the isocyanate group (NCO) is more than 1.

Examples of the epoxy polyol include epoxy polyol produced by reaction of the above-described low molecular-weight polyol with polyfunctional halohydrin such as epichlorohydrin and β-methylepichlorohydrin.

Examples of the vegetable oil polyol include hydroxyl group-containing vegetable oil such as castor oil and coconut oil. For example, castor oil polyol, or an ester-modified castor oil polyol produced by reaction of castor oil fatty acid with polypropylenepolyol is used.

Examples of the polyolefinpolyol include polybutadiene polyol and a partially saponified ethylene-vinyl acetate copolymer.

Examples of the acrylic polyol include a copolymer produced by copolymerizing hydroxyl group-containing acrylate and a copolymerizable vinyl monomer that is copolymerizable with hydroxyl group-containing acrylate.

Examples of the hydroxyl group-containing acrylate include 2-hydroxyethyl (meth)acrylate, hydroxypropyl (meth)acrylate, hydroxybutyl (meth)acrylate, 2,2-dihydroxymethylbutyl (meth)acrylate, polyhydroxyalkylmaleate, and polyhydroxyalkylfumarate. Preferably, 2-hydroxyethyl (meth)acrylate is used.

Examples of the copolymerizable vinyl monomer include alkyl (meth)acrylate (having 1 to 12 carbon atoms) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, isononyl (meth)acrylate, 2-ethylhexyl (meth)acrylate, and cyclohexylacrylate; aromatic vinyl monomers such as styrene, vinyltoluene, and α-methylstyrene; vinyl cyanides such as (meth) acrylonitrile; vinyl monomers containing a carboxyl group such as (meth) acrylic acid, fumaric acid, maleic acid, and itaconic acid or its alkylester; alkanepolyol poly (meth)acrylate such as ethylene glycoldi (meth)acrylate, butyleneglycoldi (meth)acrylate, hexanedioldi (meth)acrylate, oligoethylene glycoldi (meth)acrylate, trimethylolpropanedi (meth)acrylate, and trimethylolpropanetri (meth)acrylate; and isocyanate group-containing vinyl monomers such as 3-(2-isocyanate-2-propyl)-α-methylstyrene.

The acrylic polyol can be produced by copolymerizing these hydroxyl group-containing acrylate, and a copolymerizable vinyl monomer in the presence of a suitable solvent and a polymerization initiator.

The acrylic polyol includes, for example, silicone polyol and fluorine polyol.

Examples of the silicone polyol include acrylic polyol in which in the above-described copolymerization of acrylic polyol, a silicone compound containing a vinyl group such as γ-methacryloxypropyltrimetoxysilane as a copolymerizable vinyl monomer is blended.

Examples of the fluorine polyol include acrylic polyol in which in the above-described acrylic polyol copolymerization, a fluorine compound including a vinyl group such as tetrafluoroethylene and chlorotrifluoroethylene as a copolymerizable vinyl monomer is blended.

The vinyl monomer-modified polyol can be produced by reaction of the above-described high molecular weight polyol with a vinyl monomer.

For the high molecular weight polyol, preferably, a high molecular weight polyol selected from polyether polyol, polyester polyol, and polycarbonatepolyol is used.

Examples of the vinyl monomer include the above-described alkyl (meth)acrylate, vinyl cyanide, or vinylidene cyanide. These vinyl monomers may be used singly or in combination of two or more. Of these, preferably, alkyl (meth)acrylate is used.

The vinyl monomer-modified polyol can be produced by allowing these high molecular weight polyols and a vinyl monomer in the presence of, for example, a radical polymerization initiator (e.g., persulfate, organic peroxide, azo compound, etc.).

These high molecular weight polyols may be used singly or in a combination of two or more.

These polyol components may be used singly or in combination of two or more.

For the polyol component, preferably, a high molecular weight polyol, even more preferably, an acrylic polyol is used.

The polyol component has a hydroxyl number of, for example, 5 to 200 mgKOH/g, preferably 10 to 100 mgKOH/g. The hydroxyl number can be determined based on acetylation method or phthalation method in conformity with method A or method B of JIS K 1557-1.

The polyol component has a weight-average molecular weight based on polystyrene standard calibration in gel permeation chromatograph (GPC) measurement of, for example, 2000 to 100000, preferably 5000 to 50000.

The above-described polyol component is dissolved, as necessary, in a solvent, and prepared as a main component.

Examples of the solvent include the above-described organic solvents, and preferably, methyl ethyl ketone, methylisobutylketone, ethyl acetate, and butyl acetate are used.

Then, the above-described two-component curable polyurethane resin is suitably used as, for example, a coating (two-component curable coating) and an adhesive (two-component curable adhesive) by blending, mixing, and stirring the curing agent and the main component.

To be more specific, first, the above-described main component and the above-described curing agent are prepared, and the main component and the curing agent are mixed immediately before use to prepare the two-component curable polyurethane resin (coating, adhesive), and the two-component curable polyurethane resin is applied to a coating object or adherend.

The mixing ratio of the curing agent to the main component is, for example, as the equivalent ratio (NCO/OH) of the isocyanate group in the curing agent (polyisocyanate composition) relative to the hydroxyl group in the main component (polyol component), for example, 0.5 to 1.5, preferably 0.8 to 1.2.

In the present invention, as necessary, known additives, for example, coloring pigment, dye, ultraviolet absorber, curing accelerator, light stabilizer, and deluster for coating, and oxygen acid of phosphorus or its derivative for improvement in adhesion for film, and a silane coupling agent for adhesive can be added.

Examples of the coloring pigment and dye include inorganic pigments such as carbon black and titanium oxide having good weather resistance, and organic pigments and dye such as phthalocyanine blue, phthalocyanine green, quinacridone red, indanthrene orange, and isoindolinone-based yellow.

Examples of the ultraviolet absorber include benzophenone, benzotriazole, triazine, and cyanoacrylate ultraviolet absorbers, to be more specific, TINUVIN 213, TINUVIN 234, TINUVIN 326, and TINUVIN 571 (all manufactured by Ciba Japan K.K.) are used.

For the curing accelerator, for example, dibutyltindilaurate is used.

Examples of the light stabilizer include hindered amine light stabilizers (e.g., ADK STAB LA 62, ADK STAB LA 67 (all manufactured by Adeka Argus Chemical Co., Ltd., trade name), TINUVIN 765, TINUVIN 144, TINUVIN 770, TINUVIN 622 (all manufactured by Ciba Japan K.K., trade name), etc.), and blended light stabilizers (e.g., TINUVIN B 75, and TINUVIN PUR 866 (all manufactured by Ciba Japan K.K., trade name), etc.).

For the deluster, for example, superfine synthesized silica is used. When a deluster is blended, elegant semigloss, and delustering finished film can be formed.

These coloring pigment, dye, ultraviolet absorber, curing accelerator, light stabilizer, and deluster may be used singly or in combination of two or more.

In the oxygen acid of phosphorus or its derivative, examples of the oxygen acid of phosphorus include phosphoric acids such as hypophosphorous acid, phosphorous acid, orthophosphoric acid, and hypophosphoric acid; and condensed phosphates such as metaphosphoric acid, pyrophosphoric acid, tripolyphosphoric acid, polyphosphoric acid, and ultraphosphoric acid.

Examples of the derivative of oxygen acid of phosphorus include phosphates or condensed phosphates of sodium and potassium, etc.; monoesters such as monomethyl orthophosphate, monoethyl orthophosphate, monopropyl orthophosphate, monobutyl orthophosphate, mono-2-ethylhexyl orthophosphate, monophenyl orthophosphate, monomethyl phosphite, monoethyl phosphite, monopropyl phosphite, monobutyl phosphite, mono-2-ethylhexyl phosphite, and monophenyl phosphite; di and tri esters such as di-2-ethylhexyl orthophosphate, diphenyl orthophosphate, trimethyl orthophosphate, triethyl orthophosphate, tripropyl orthophosphate, tributyl orthophosphate, tri-2-ethylhexyl orthophosphate, triphenyl orthophosphate, dimethyl phosphite, diethyl phosphite, dipropyl phosphite, dibutyl phosphite, di-2-ethylhexyl phosphite, diphenyl phosphite, trimethyl phosphite, triethyl phosphite, tripropyl phosphite, tributyl phosphite, tri-2-ethylhexyl phosphite, and triphenyl phosphite; or mono, di, and tri esters produced from condensed phosphate and alcohols.

For the oxygen acid of phosphorus or its derivative, the above-described oxygen acid of phosphorus or its derivative can be used singly or can be used in combination.

The silane coupling agent is represented by, for example, structural formula R-Si≡(X)₃ or R-Si=(R')(X)₂ (where R represents an organic group having a vinyl group, epoxy group, amino group, imino group, isocyanate group or mercapto group, and R' represents a lower alkyl group having 1 to 4 carbon atoms, and X represents a methoxy group, ethoxy group or chlorine atom.).

Examples of the silane coupling agent include, to be specific, chlorosilane such as vinyltrichlorosilane; epoxysilanes such as γ-glycidoxypropyltrimetoxysilane, γ-glycidoxypropyltriethoxysilane, β-(3,4-epoxycyclohexyl) ethyltrimetoxysilane, and di(y-glycidoxypropyl) dimethoxysilane; aminosilanes such as N-β-(aminoethyl)-γ-aminopropyltrimetoxysilane, γ-aminopropyltriethoxysilane, N-β-(aminoethyl)-γ-propylmethyldimethoxysilane, n-(dimethoxymethylsilylpropyl) ethylene diamine, n-(triethoxysilylpropyl) ethylene diamine, and N-phenyl-γ-aminopropyltrimetoxysilane; vinylsilanes such as vinyltriethoxysilane; and isocyanatosilanes such as y-isocyanatopropyltrimetoxysilane, and γ-isocyanatopropyltriethoxysilane.

For the silane coupling agent, the above-described various silane coupling agents can be used singly or can be used in combination.

These additives can be blended in advance with the above-described main component and/or curing agent, or can be blended with the two-component curable polyurethane resin after the main component and the curing agent are blended.

The mixing ratio of the additive is not particularly limited, and is set suitably in accordance with the purpose and application.

The two-component curable polyurethane resin can be used, without particular limitation, for coating of a coating object by any coating method such as spray coating, air spray coating, brushing, immersion, roll coating, and flow coating; and for applying to an adherend for adherence by any application method such as dry laminate method, wet laminate method, and direct coating method.

The coating object is not particularly limited, and examples thereof include inorganic substance such as concrete, natural stone, and glass; metals such as iron, stainless steel, aluminum, copper, brass, and titanium: and organic substance such as plastic, rubber, adhesive, wood.

The adherend is not particularly limited, and examples thereof include various building materials and various laminate films. To be more specific, packaging materials such as plastic film, metal foil, and metal deposited film; and civil engineering materials such as FRP and steel materials.

The two-component curable polyurethane resin, and the coating and adhesive in which the two-component curable polyurethane resin is used have excellent adhesion and quick-drying properties.

In particular, the two-component curable polyurethane resin is suitably used in variety of fields such as plastic paint, automobile paint, film coating agent, various inks, various adhesives, pressure-sensitive adhesives, sealing material, various microcapsules, plastic lens, artificial and synthetic leather, Reaction Injection Molding, slush powder, elastic mold (spandex), and urethane foam.

### Examples

In the following, the present invention is described in detail with reference to Examples and Comparative Examples. However, the present invention is not limited thereto. In the description below, "parts" and "%" are based on mass unless otherwise specified. The numeral values in Examples below can be replaced with the corresponding numeral values used in the embodiments (that is, upper limit value or lower limit value). The measurement methods used in Production Examples are shown below.

### <Solid content concentration (unit: mass%)>

The solid content concentration of the polyisocyanate composition is determined based on the solid content (non-volatile matter content) obtained in conformity with JIS K 5601 1-2.

### <Isocyanate group concentration (unit: mass%)>

The isocyanate group concentration of the polyisocyanate composition is determined by the n-dibutylamine method in conformity with JIS K-1556 using the potentiometric titrator.

### <Viscosity measurement (unit: mPa·s)>

The viscosity is measured at 25°C using type B viscometer RB 85 L (manufactured by TOKI Sangyo Co., Ltd.).

### <Gel permeation chromatograph (number average molecular weight of polyisocyanate composition, isocyanate derivative (the isocyanate derivative produced by reaction of 3 molecules of xylylenediisocyanate with 1 molecule of trimethylolalkane) content, remaining monomer concentration)>

The polyisocyanate composition produced in Examples and Comparative Examples was allowed to react with methanol, and a produced methylurethane product was used as a sample.

Then, 40 mg of the above-described sample was dissolved in 4 ml of tetrahydrofuran, thereby preparing a sample.

In Alliance (manufactured by WATERS), three columns of Plgel 5 µm Mixed-C (molecular weight measurement range; 100-1000000, manufactured by Polymerlab) were connected in series.

The number average molecular weight of the polyisocyanate composition was determined by using tetrahydrofuran as an eluent, using a refractive index detector as a detector, setting the flow rate to 1.0 mL/min, the temperature of the column and the detector to 40°C, based on standard polystyrene (trade name: TSK standard polyethylene oxide, manufactured by Tosoh Corporation) having a molecular weight in the range of 150-3800000, making a calibration curve, based on the retention time and using an EMPOWER data processing device (manufactured by WATERS).

With the same device, the percentage (area%) of the peak area having a peak top in the retention time from 26.1 minute to 26.2 minutes relative to the total peak area was determined from the obtained chromatogram, and the area percentage (area%) was defined as the isocyanate derivative (the isocyanate derivative produced by allowing 3 molecules of xylylenediisocyanate to react with 1 molecule of trimethylolalkane) content.

Furthermore, the percentage (area%) of the peak area having a peak top in retention time 27.8 minutes to 27.9 minutes relative to the total peak area was determined, and the area percentage (area%) was defined as the remaining monomer concentration.

### <Production of polyisocyanate composition>

### Example 1 (Production of polyisocyanate composition (EI-1))

TMP and XDI were subjected to urethane-forming reaction so that the equivalent ratio (NCO/OH) of the isocyanate group in the m-xylylenediisocyanate (TAKENATE 500 manufactured by Mitsui Chemicals, inc. hereinafter abbreviated as XDI) relative to the hydroxyl group in the trimethylolpropane (hereinafter abbreviated as TMP) was 4.5.

That is, a dropping funnel was charged with 52.6 parts by mass of TMP, and heating was conducted by a ribbon heater, thereby dissolving TMP. Then, a four-neck flask equipped with a mixer, a thermometer, a reflux tube, and a nitrogen inlet tube was charged with 497.4 parts by mass of XDI, and the temperature was increased to 70°C while stirring in a nitrogen atmosphere. Then, the dissolved TMP was dropped taking about 60 minutes, and the temperature was increased to 73°C after completion of dropping. Thereafter, reaction was continued until the isocyanate group concentration reached the calculated value.

Then, the temperature of this reaction solution was decreased to 55°C, and thereafter 240 parts by mass of the mixed extraction solvent (n-hexane/ethyl acetate = 76/24(mass ratio)) was added. The mixture was stirred for 10 minutes, allowed to stand for 5 minutes, and the extraction solvent layer was removed. The same extraction operation was repeated for 10 times.

Thereafter, the extraction solvent remained in the reaction solution was removed from the obtained reaction solution under reduced pressure by heating to 83°C, thereby producing a polyisocyanate composition (E-1).

The polyisocyanate composition (E-1) had a remaining monomer concentration of 2.4 mass%, a number average molecular weight of 1186, an isocyanate group concentration of 15.3 mass%, an area% (that is, 1 molecular TMP product content) of the isocyanate derivative (1 molecular trimethylolpropane (hereinafter abbreviated as 1 molecular TMP product)) produced by reaction of 1 molecule of TMP and 3 molecules of XDI in GPC chart of 42%, and an average number of isocyanate group of 4.3.

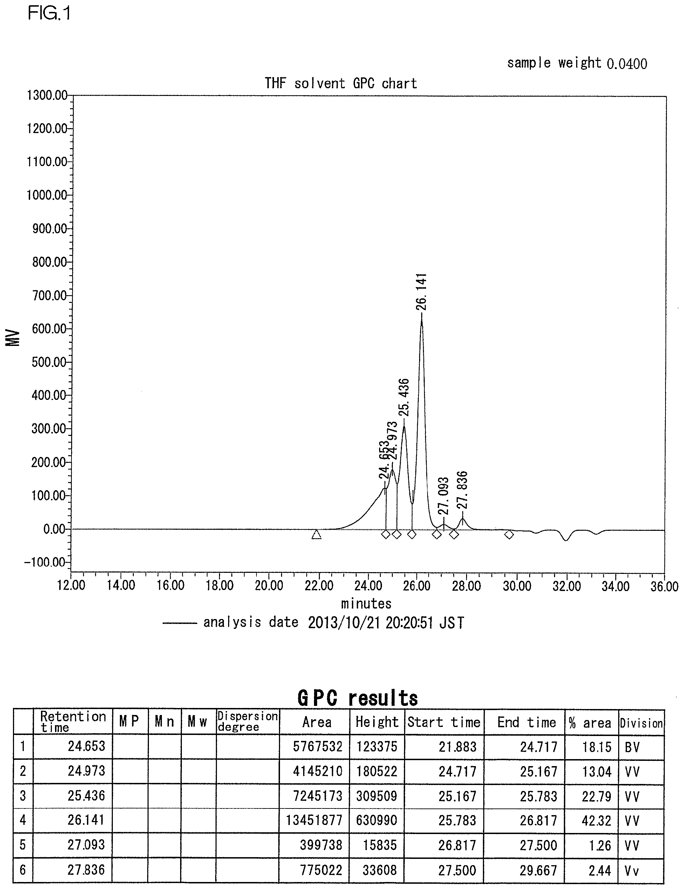

The GPC chart (gel permeation chromatogram) is shown in FIG. 1.

Furthermore, ethyl acetate was added so that the solid content concentration (hereinafter abbreviated as NV) was 75 mass%, thereby producing a polyisocyanate composition (EI-1).

The produced polyisocyanate composition (EI-1) had an isocyanate group concentration of 11.4%, a viscosity of 930mPa·s/25°C, and an NV of 74.8%.

### Example 2 (Production of polyisocyanate composition (EI-2))

A polyisocyanate composition (E-2) was produced in the same manner as in Example 1, except that the equivalent ratio (NCO/OH) in the reaction of TMP and XDI was set to 3.

The produced polyisocyanate composition (E-2) had a remaining monomer concentration of 1.7 mass%, a number average molecular weight of 1423, an isocyanate group concentration of 13.9 mass%, an area% (that is, 1 molecular TMP product content) of 1 molecular TMP product in GPC chart of 32%, and an average number of isocyanate group of 4.7.

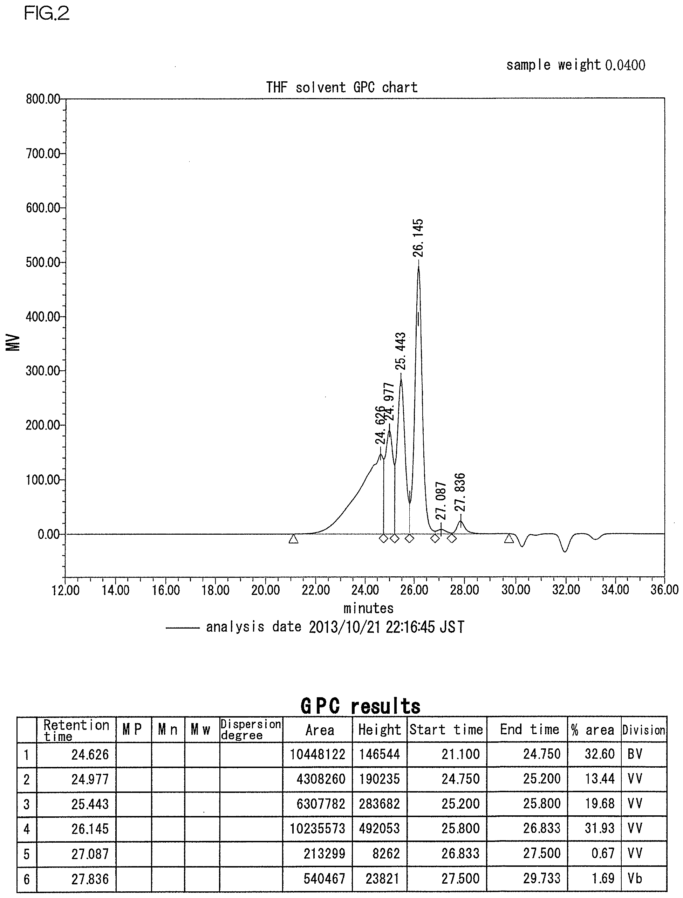

The GPC chart (gel permeation chromatogram) is shown in FIG. 2.

Furthermore, ethyl acetate was added so that the solid content concentration (hereinafter abbreviated as NV) was 75 mass%, thereby producing a polyisocyanate composition (EI-2).

The produced polyisocyanate composition (EI-2) had an isocyanate group concentration of 10.4%, and a viscosity of 2180mPa·s/25°C, and an NV of 74.8%.

### Example 3 (Production of polyisocyanate composition (EI-3))

A polyisocyanate composition (E-3) was produced in the same manner as in Example 1, except that the equivalent ratio (NCO/OH) in the reaction of TMP and XDI was set to 6.3, the reaction temperature of TMP (after dropping) and XDI was set to 90°C, and the mixed extraction solvent ratio at the time of solvent extraction was set to n-hexane/ethyl acetate = 68/32 (mass ratio).

The produced polyisocyanate composition (E-3) had a remaining monomer concentration of 2.0 mass%, a number average molecular weight of 1165, an isocyanate group concentration of 15.6 mass%, an area% (that is, 1 molecular TMP product content) of 1 molecular TMP product in GPC chart of 44%, and an average number of isocyanate group of 4.3.

Furthermore, ethyl acetate was added so that the solid content concentration (hereinafter abbreviated as NV) was 75 mass%, thereby producing a polyisocyanate composition (EI-3).

The produced polyisocyanate composition (EI-3) had an isocyanate group concentration of 11.7%, a viscosity of 880mPa·s/25°C, and an NV of 74.8%.

### Example 4 (Production of polyisocyanate composition (EI-4))

TMP and XDI were subjected to urethane-forming reaction so that the equivalent ratio (NCO/OH) of the isocyanate group in the XDI relative to the hydroxyl group in TMP was 4.5.

That is, a dropping funnel was charged with 52.6 parts by mass of TMP, and heating was conducted by a ribbon heater, thereby dissolving TMP. Then, a four-neck flask equipped with a mixer, a thermometer, a reflux tube, and a nitrogen inlet tube was charged with 497.4 parts by mass of XDI, and the temperature was increased to 70°C while stirring in a nitrogen atmosphere. Then, the dissolved TMP was dropped taking about for 60 minutes, and the temperature was increased to 73°C after completion of dropping. Thereafter, reaction was continued until the isocyanate group concentration reached the calculated value.

The produced reaction solution was passed through a thin film distillation device (degree of vacuum 50Pa, temperature 150°C) and unreacted XDI was removed, thereby producing a polyisocyanate composition (E-4).

The produced polyisocyanate composition (E-4) had a remaining monomer concentration of 0.9 mass%, a number average molecular weight of 1175, an isocyanate group concentration of 15.6 mass%, an area% (that is, 1 molecular TMP product content) of 1 molecular TMP product of 44%, and an average number of isocyanate group of 4.4.

Furthermore, ethyl acetate was added so that the solid content concentration (hereinafter abbreviated as NV) was 75 mass%, thereby producing a polyisocyanate composition (EI-4).

The produced polyisocyanate composition (EI-4) had an isocyanate group concentration of 11.7%, a viscosity of 910mPa·s/25°C, and an NV of 75.0%.

Comparative Example 1 (Production of polyisocyanate composition (EI-5)) Commercially available TAKENATE D-110N (TMP modified XDI, manufactured by Mitsui Chemicals, Inc.) was used as a polyisocyanate composition (E-5).

TAKENATE D-110N is a polyisocyanate composition produced by setting the equivalent ratio (NCO/OH) in the reaction of TMP and XDI to 6.3, and removing the unreacted XDI by liquid-liquid extraction.

The polyisocyanate composition (E-5) had a remaining monomer concentration of 0.7 mass%, a number average molecular weight of 1188 measured based on GPC, an isocyanate group concentration of 15.8 mass%, an area% (that is, 1 molecular TMP product content) of 1 molecular TMP product in GPC chart of 50%, and an average number of isocyanate group of 4.5.

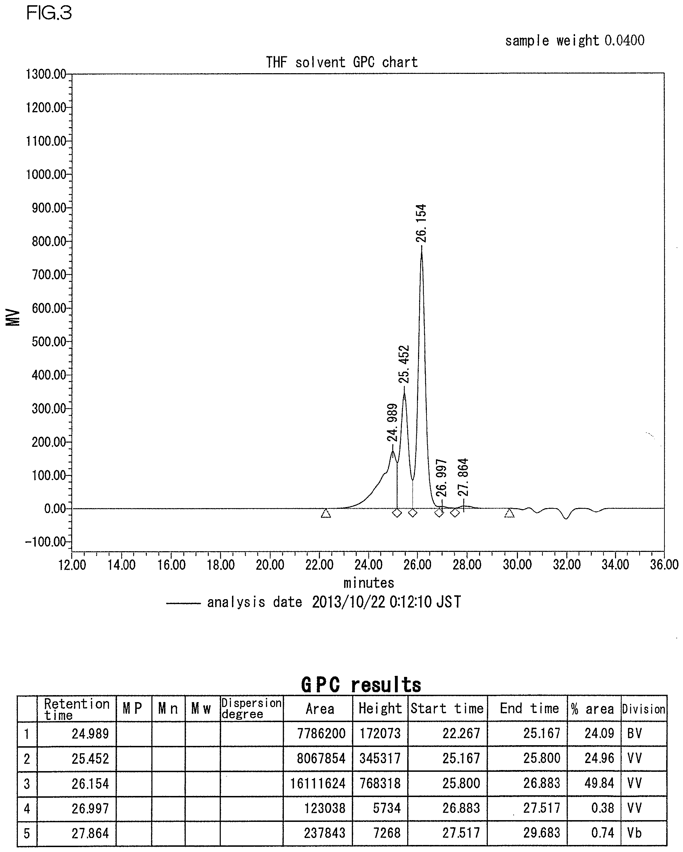

The GPC chart (gel permeation chromatogram) is shown in FIG. 3. Furthermore, ethyl acetate was added so that the solid content concentration (hereinafter abbreviated as NV) was 75 mass%, thereby producing a polyisocyanate composition (EI-5). The produced polyisocyanate composition (EI-5) had an isocyanate group concentration of 11.8%, a viscosity of 530mPa·s/25°C, and an NV of 74.9%.

### Comparative Example 2

TMP and XDI were allowed to react in the same manner as in Example 1, except that the equivalent ratio (NCO/OH) in the reaction of TMP and XDI was set to 2.0. Small gells generated 30 minutes after the reaction, and the viscosity of the reaction solution increased finally, and a polyisocyanate composition could not be produced.

### Comparative Example 3 (Production of polyisocyanate composition (EI-6))

A polyisocyanate composition (E-6) was produced in the same manner as in Example 3, except that the mixed extraction solvent ratio at the time of solvent extraction was set to n-hexane/benzene = 68/32(mass ratio).

The produced polyisocyanate composition (E-6) had a remaining monomer concentration of 2.1 mass%, a number average molecular weight of 1177, an isocyanate group concentration of 15.7 mass%, an area%(that is, 1 molecular TMP product content) of 1 molecular TMP product in GPC chart of 47%, and an average number of isocyanate group of 4.4.

Furthermore, ethyl acetate was added so that the solid content concentration (hereinafter abbreviated as NV) was 75 mass%, thereby producing a polyisocyanate composition (EI-6).

The produced polyisocyanate composition (EI-6) had an isocyanate group concentration of 11.7%, a viscosity of 850mPa·s/25°C, and an NV of 74.8%.

### <Preparation of two-component curable polyurethane resin and formation of film>

### Preparation Example 1

The polyisocyanate composition EI-1 produced in Example 1 was blended with acrylic polyol (manufactured by Mitsui Chemicals, Inc., trade name: Olester Q 666, hereinafter abbreviated as Q 666.) at a ratio such that the equivalent ratio (NCO/OH) of the isocyanate group in the polyisocyanate composition relative to the hydroxyl group in acrylic polyol was 1.0. The solid content was adjusted to 50% with a thinner (solvent mixture of ethyl acetate/butyl acetate/propylene glycolmethylether acetate = 1/1/1(mass ratio)), and the mixture was stirred at 23°C for 10 minutes, thereby producing a reaction mixture.

Then, the reaction mixture was applied on the standard test plates shown in Table 1, and thereafter, dried at 80°C for 30 minutes to cure, thereby producing a polyurethane resin film a having a thickness of about 45 µm.

The produced polyurethane resin film a was allowed to stand in a room having a temperature of 23°C and a relative humidity of 50% for 7 days.

### Preparation Example 2

A polyurethane resin film b having a thickness of about 45 µm was produced in the same manner as in Preparation Example 1, except that the polyisocyanate composition EI-2 produced in Example 2 was used.

The produced polyurethane resin film b was allowed to stand in a room having a temperature of 23°C and a relative humidity of 50% for 7 days.

### Preparation Example 3

A polyurethane resin film c having a thickness of about 45 µm was produced in the same manner as in Preparation Example 1, except that the polyisocyanate composition EI-3 produced in Example 3 was used.

The produced polyurethane resin film c was allowed to stand in a room having a temperature of 23°C and a relative humidity of 50% for 7 days.

### Preparation Example 4

A polyurethane resin film d having a thickness of about 45 µm was produced in the same manner as in Preparation Example 1, except that the polyisocyanate composition EI-4 produced in Example 4 was used.

The produced polyurethane resin film d was allowed to stand in a room having a temperature of 23°C and a relative humidity of 50% for 7 days.

### Comparative Preparation Example 1

A polyurethane resin film e having a thickness of about 45 µm was produced in the same manner as in Preparation Example 1, except that the polyisocyanate composition EI-5 produced in Comparative Example 1 was used.

The produced polyurethane resin film e was allowed to stand in a room having a temperature of 23°C and a relative humidity of 50% for 7 days.

### «Coating evaluation»

The polyurethane resin film (hereinafter abbreviated as film) produced in Preparation Examples and Comparative Preparation Examples was evaluated for set-to-touch, through dry, and substrate adhesion (substrate; metal, plastic) with the following method. The results are shown in Table 1.

### <Set-to-touch (unit: seconds)>

In Preparation Examples, a glass plate (JIS R 3202) was used as the test piece, and coated with the mixture liquid with a 100 µm applicator. The time required until the fingertips did not get smudges was evaluated when the center portion of the plane where the mixture liquid was applied was touched (in conformity with JIS K 5600-1-1). The results are shown in Table 1.

### <Through dry (unit: minutes)>

In Preparation Examples, a glass plate (JIS R 3202) was used as the test piece, and coated with the mixture liquid with a 100 µm applicator. The time required until the following conditions were reached when center portion of the test piece was strongly pinched with a thumb and an index finger was evaluated: no depression with fingerprints on the coated surface, no movement of the film, and no scours left when the surface applied was scratched repeatedly with fingertips (in conformity with JIS K 5600-1-1). The results are shown in Table 1.

### <Substrate adhesion>

In Preparation Examples, a metal test piece (steel plate; JIS G 3141 SPCC SB), and a plastic test piece (nylon; NY, JIS K 6920) were used.

The produced films were subjected to adhesion test by the cross-cut method (in conformity with JIS K 5600 5-6). Adhesion was evaluated in accordance with the classes described in JIS below.
Class 0; The edges in cuts were completely smooth, and no lattice was delaminated.
Class 1; Small delamination of film occurred at the intersections of the cut. Clearly not more than 5% was affected at the cross-cut portion.
Class 2; Film was delaminated along the edges of the cut, and/or at intersections. Clearly more than 5% but not more than 15% was affected at the cross-cut portion.
Class 3; Film was largely delaminated partially or entirely along the edges of the cut, and/or various portions of the lattice was delaminated partially or entirely. Clearly more than 15% but not more than 35% was affected at the cross-cut portion.
Class 4; Film was largely delaminated partially or entirely along the edge of the cut, and/or some lattices were delaminated partially or entirely. Clearly not more than 35% was affected at the cross-cut portion.
Class 5; Delamination occurred more than those classified into class 4.

The results are shown in Table 1.

**[Table 1]**

| No. | | | Preparation Example 1 | Preparation Example 2 | Preparation Example 3 | Preparation Example 4 | Comparative Preparation Example 1 |
|---|---|---|---|---|---|---|---|
| Polyisocyanate composition | | | Example 1 | Example 2 | Example 3 | Example 4 | Comparative Example 1 |
| | | | EI-1 | EI-2 | EI-3 | EI-4 | EI-5 |
| Film | | | a | b | c | d | e |
| Evaluation | Set-to-touch | Seconds | 60 | 30 | 65 | 65 | 85 |
| | Through dry | Minutes | 40 | 30 | 45 | 45 | 55 |
| | Substrate adhesion | Metal | 0 | 0 | 0 | 0 | 0 |
| | | Plastic | 1 | 0 | 1 | 1 | 2 |

### «Adhesive evaluation»

### (Preparation Examples 1,2, 3,4, and Comparative Preparation Example 1 for curing agent for laminate adhesive)

The polyisocyanate composition (EI-1 to EI-5) prepared in Examples and Comparative Examples was mixed with TAKENATE D-140N (ethyl acetate solution of TMP adduct of isophoronediisocyanate, solid content 75%, manufactured by Mitsui Chemicals, Inc.) at a mass ratio of 3 to 1, and the mixtures were prepared as curing agent AEI-1, AEI-2, AEI-3, AEI-4, and AEI-5 for laminate adhesive.

### (Laminate adhesive evaluation Examples 1 to 4, evaluation Comparative Example 1)

TAKELAC A-505 (manufactured by Mitsui Chemicals, Inc., terminal hydroxyl group-containing urethane resin, solid content 50%) was mixed with AEI-1 to AEI-5 produced in preparation of the above-described curing agent for laminate adhesive at a mass ratio of 9 to 1, and the solid content as a whole was adjusted to 25 mass% with ethyl acetate, thereby preparing a laminate adhesive.

Using the adhesive, aluminum foil (manufactured by TOYO ALUMINIUM K.K., product number 9µ) was bonded to a cast polypropylene film RXC-22 (manufactured by Mitsui Chemicals Tohcello. Inc., product number 60µ) so that the amount applied after drying was 3.5 g/m², the laminate was stored at 40°C, and subjected to adhesive strength measurement over time.

The adhesive strength was measured under 24°C by T-PEEL, a 15 mm width and a tensile speed of 300 mm/min. The results are shown in Table 2.

**[Table 2]**

| No. | | Preparation Example 1 | Preparation Example 2 | Preparation Example 3 | Preparation Comparative Example 4 | Preparation Example 1 |
|---|---|---|---|---|---|---|
| Polyisocyanate composition | | Example 1 | Example 2 | Example 3 | Example 4 | Comparative Example 1 |
| | | EI-1 | EI-2 | EI-3 | EI-4 | EI-5 |
| Curing agent for laminate adhesive | | AEI-1 | AEI-2 | AEI-3 | AEI-4 | AEI-5 |
| Laminate strength (N/15mm) | | | | | | |
| | Immediately after bonding | 3.5 | 3.2 | 3.1 | 3.1 | 2.6 |
| | After 1 hour | 5.9 | 5.5 | 5.4 | 5.4 | 4.6 |
| | After 2 hours | 7.8 | 7.5 | 7.5 | 7.5 | 6.2 |
| | After 3 hours | 8.5 | 8.6 | 8.5 | 8.5 | 8.3 |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The polyisocyanate composition, production method thereof, the two-component curable polyurethane resin produced by using the polyisocyanate composition, the coating, and the adhesive of the present invention are suitably used in variety of fields such as plastic paint, automobile paint, film coating agent, various inks, various adhesives, pressure-sensitive adhesives, sealing material, various microcapsules, plastic lens, artificial and synthetic leather, Reaction Injection Molding, slush powder, elastic mold (spandex), and urethane foam.

## Claims

1. A polyisocyanate composition produced by reaction of xylylenediisocyanate with trimethylolalkane,
wherein the isocyanate derivative content relative to a total amount of the polyisocyanate composition is 45 mass% or less, the isocyanate derivative being produced by reaction of 3 molecules of xylylenediisocyanate with 1 molecule of trimethylolalkane.

2. The polyisocyanate composition according to Claim 1,
wherein in the reaction of xylylenediisocyanate with trimethylolalkane,
the equivalent ratio (isocyanate group/hydroxyl group) of the isocyanate group in xylylenediisocyanate relative to the hydroxyl group in trimethylolalkane is 2.5 or more and 6 or less.

3. The polyisocyanate composition according to Claim 1,
produced by removing unreacted xylylenediisocyanate by liquid-liquid extraction from a crude product produced by reaction of xylylenediisocyanate with trimethylolalkane.

4. A two-component curable polyurethane resin comprising:
a curing agent including a polyisocyanate composition, and
a main component including a polyol component,
wherein
the polyisocyanate composition is a
polyisocyanate composition produced by reaction of xylylenediisocyanate with trimethylolalkane,
wherein the isocyanate derivative content relative to a total amount of the polyisocyanate composition is 45 mass% or less, the isocyanate derivative being produced by reaction of 3 molecules of xylylenediisocyanate with 1 molecule of trimethylolalkane.

5. A coating comprising:
a two-component curable polyurethane resin,
wherein the two-component curable polyurethane resin includes a curing agent including a polyisocyanate composition, and
a main component including a polyol component,
the polyisocyanate composition is
produced by reaction of xylylenediisocyanate with trimethylolalkane,
the isocyanate derivative content relative to a total amount of the polyisocyanate composition is 45 mass% or less, the isocyanate derivative being produced by reaction of 3 molecules of xylylenediisocyanate with 1 molecule of trimethylolalkane.

6. An adhesive comprising:
a two-component curable polyurethane resin,
wherein the two-component curable polyurethane resin includes a curing agent including a polyisocyanate composition, and
a main component including a polyol component,
the polyisocyanate composition is
produced by reaction of xylylenediisocyanate with trimethylolalkane,
the isocyanate derivative content relative to a total amount of the polyisocyanate composition is 45 mass% or less, the isocyanate derivative being produced by reaction of 3 molecules of xylylenediisocyanate with 1 molecule of trimethylolalkane.

7. A method for producing a polyisocyanate composition comprising:
allowing xylylenediisocyanate to react with trimethylolalkane,
thereafter removing unreacted xylylenediisocyanate from the produced crude product by liquid-liquid extraction in which an extraction solvent including aliphatic hydrocarbons, and ketones and/or alkylesters are used,
wherein the isocyanate derivative content relative to a total amount of the polyisocyanate composition is 45 mass% or less, the isocyanate derivative being produced by reaction of 3 molecules of xylylenediisocyanate with 1 molecule of trimethylolalkane.
